# EUROPÄISCHE PATENTANMELDUNG

(11) **EP 1 712 132 A2**
(43) Veröffentlichungstag der Anmeldung: **18.10.2006**
(21) Anmeldenummer: 06112261.0
(22) Anmeldetag: 05.04.2006
(51) Int. Cl.: A21B 1/22, A21B 1/46, A21B 7/00

(54) **Überwachungsvorrichtung für eine Backvorrichtung**

(30) Priorität: 11.04.2005 DE 102005016766
(71) Anmelder: MIWE Michael Wenz GmbH, 97450 Arnstein (DE)
(72) Erfinder: Engelhardt, Dieter, 97836, Bischbrunn (DE); Leppich, Peter, 97450, Arnstein (DE)
(74) Vertreter: Patentanwälte Freischem

(57) **Zusammenfassung**

Die Erfindung betrifft eine Backvorrichtung mit einem Backofen (1), der eine Heizvorrichtung (11) aufweist, und mit einer Transportvorrichtung (2) für den Transport von Backrohlingen durch den Innenraum des Backofens (1), wobei die Heizvorrichtung (11) und die Transportvorrichtung (2) mit einem Betriebsstrom gespeist werden.

Aufgabe der vorliegenden Erfindung ist es, die Betriebssicherheit einer derartigen Backvorrichtung zu erhöhen.

Diese Aufgabe wird erfindungsgemäß, dadurch gelöst, daß sie mindestens eine Überwachungsvorrichtung zur Überwachung des Betriebsstrom mindestens einer der beiden Vorrichtungen (2,11) aufweist und daß die Überwachungsvorrichtung mindestens eine Schnittstelle zur Ausgabe eines Überwachungssignals aufweist.

## Beschreibung

### Technisches Gebiet

Die Erfindung betrifft eine Backvorrichtung gemäß dem Oberbegriff des Patentanspruchs 1.

### Stand der Technik

Eine derartige Backvorrichtung ist beispielsweise bekannt aus der Druckschrift DE 30 12 043 C2. Hier wird eine Backvorrichtung mit einem Backofen beschrieben, der in seiner oberen Wand eine Zufuhröffnung und in seiner unteren Wand eine Abgabeöffnung aufweist. Über einen als Zellrad ausgebildeten Vereinzeler werden einzelne Backrohlinge zugeführt, welche im vorliegenden Fall als längliche Weißbrote, im Französischen als Baguette bezeichnet, ausgebildet sind. Die Backrohlinge sind vorzugsweise vorgebackene Teigwaren (Teiglinge). Über den als Zellrad ausgebildeten Vereinzeler werden sie in eine Position oberhalb einer Gondel eines Gondelförderers gebracht und fallen beim Weiterdrehen des Zellrades in die Gondel. Die Gondel bildet das Tragmittel für die Backrohlinge. Der Gondelförderer befindet sich in dem Backraum des Backofens. Er umfaßt zwei parallele und mäanderförmig verlaufende Förderketten, mit denen die mit Teigwaren befüllten Gondeln durch den Backraum des Backofens transportiert werden.

### Darstellung der Erfindung

Aufgabe der vorliegenden Erfindung ist es, die Betriebssicherheit einer derartigen Backvorrichtung zu erhöhen.

Diese Aufgabe wird erfindungsgemäß durch die Merkmale des kennzeichnenden Teils des Anspruchs 1 gelöst.

Durch die Betriebsstrom-Überwachung lassen sich zahlreiche Fehlfunktionen oder Ausfälle der Backvorrichtung frühzeitig erfassen. Aufgrund des Überwachungssignals kann entweder an der Backvorrichtung selbst ein Alarmsignal ausgegeben werden, oder es kann ein Fehlerprotokoll erstellt werden, welches einem Techniker wertvolle Informationen für die Wartung der Backvorrichtung zur Verfügung stellt.

Bei einer ersten Ausführungsform der Erfindung wird der Betriebsstrom der Heizvorrichtung überwacht. Die Heizvorrichtung besteht vorzugsweise aus Heizmitteln, insbesondere Heizstäben, die symmetrisch mit einem 3-Phasen-Drehstromnetz verschaltet sind. Das heißt, daß jede der 3 Phasen des Drehstromnetzes mit dem gleichen Heizstrom belastet ist. Der Nulleiter des Drehstromnetzes führt bei symmetrischer Belastung keinen Strom. Fällt ein Heizstab aus, geht die Symmetrie der Belastung der drei Phasen verloren und es findet ein Stromfluß über den Nulleiter der Heizvorrichtung statt.

Dieser Stromfluß kann insbesondere durch ein Meßsignal eines induktiven Meßgebers erfaßt werden. Der induktive Meßgeber kann beispielsweise als Spule ausgebildet werden, die von dem Nulleiter des Drehstromnetzes durchragt wird. Sobald ein Heizstab ausfällt, wird der durch den Nulleiter fließende Betriebsstrom der Heizvorrichtung erfaßt. Das Ausfallen eines einzigen Heizstabes hat nicht zur Folge, daß die Funktion des Backofens erheblich beeinträchtigt wird. Ein qualitativ hochwertiger Backofen für die Lebensmittelproduktion weist eine Vielzahl von Heizstäben, beispielsweise zwölf Heizstäbe, auf. Wenn ein Heizstab ausfällt, kann der Backofen diesen Ausfall kompensieren. Z.B. können ein oder mehrere Heizstäbe zugeschaltet werden oder die Steuerung des Backofens kann das Backprogramm entsprechend ändern und die Verweildauer der Backrohlinge in dem Backofen verlängern.

Das Signal, welches den Ausfall eines Heizstabes signalisiert, informiert aber darüber, daß spätestens bei der nächsten Wartung ein Heizstab auszutauschen ist.

Alternativ oder zusätzlich kann der Betriebsstrom eines Antriebsmotors der Transportvorrichtung überwacht werden. Der Betriebsstrom des Motors ist ein Maß für die von dem Motor abgegebene Leistung. Wenn diese Leistung einen normalen Wert übersteigt, ist der Widerstand der Transportvorrichtung zu groß. Dies kann auf eine Verschmutzung der Transportvorrichtung oder auf eine Beschädigung der Transportvorrichtung zurückzuführen sein und ist wiederum Anlaß für Wartungsarbeiten an der Backvorrichtung.

In einer praktischen Ausführungsform wird der Antriebsmotor über einen Strom-umrichter gespeist, und der Strom-umrichter wirkt als Überwachungsvorrichtung. Moderne Strom-umrichter, die digital gesteuert den optimalen Betriebsstrom für den Antriebsmotor bereitstellen, erfassen über ihre internen Bauelemente oder Schaltkreise die Stärke des abgegebenen Betriebsstroms. Ein Signal, das diese Betriebsstromstärke wiedergibt, kann an dem Strom-umrichter abgegriffen und als Überwachungssignal verwendet werden.

Darüber hinaus kann ein Bewegungssensor vorhanden sein, der die Bewegung der Transportvorrichtung erfaßt und über eine Schnittstelle ein dieser Bewegung zugeordnetes Überwachungssignal abgibt.

Bei einer ernsthaften Beschädigung oder Blockierung der Transportvorrichtung kann es zu einem vollständigen Stillstand kommen. Dieser wird durch den Bewegungssensor festgestellt. Bei einem Stillstand der Transportvorrichtung verbleiben die auf der Transportvorrichtung befindlichen Backrohlingen in dem Backofen. In diesem Fall ist es erforderlich, den Backofen auszustellen, um ein Verbrennen dieser Backrohlingen zu vermeiden. Außerdem ist es sinnvoll, den Betriebsstrom des Antriebsmotors abzustellen, damit dieser keine Kräfte auf die blockierte Transportvorrichtung überträgt und selbst nicht beschädigt wird.

Die oben genannten Überwachungssignale können auf einer Datenspeichervorrichtung abgespeichert werden. Insbesondere in bezug auf die Stromstärke des Betriebsstroms des Antriebsmotors oder auf das Überwachungssignal bezüglich des Heizstroms ist eine derartige Speicherung sinnvoll. Dem Signalverlauf können, wie erwähnt, kleinere Unregelmäßigkeiten und Verschleißerscheinungen an der Backvorrichtung entnommen werden. Der auf einem Datenspeicher abgelegte Verlauf des Überwachungssignals kann bei Wartungsarbeiten zur Analyse möglicher Fehler der Backvorrichtung verwendet werden.

Dabei kann das Überwachungssignal kontinuierlich gespeichert werden. Alternativ kann das Überwachungssignal in festgelegten Zeitabständen gespeichert werden. Ferner ist es möglich, das Überwachungssignal bei Überschreiten eines Schwellenwertes nach oben oder unten abzuspeichern. Der Heizstrom im Nulleiter des 3-Phasen-Stromnetzes ist üblicherweise vernachlässigbar klein und muß erst abgespeichert werden, wenn er einen bestimmten Schwellenwert überschreitet, der den Ausfall eines Heizstabes signalisiert.

Eine vorzugsweise digitale Auswerteeinheit analysiert das Überwachungssignal und stellt das Überschreiten oder Unterschreiten vorher festgelegter Schwellen werte fest. Es kann auch eine komplexere Analyse wie z.B. die Anstiegsgeschwindigkeit des Signals o.ä. durch die Auswerteeinheit ermittelt werden.

Das Überwachungssignal kann ebenfalls bei Überschreiten eines Schwellenwertes eine der Backvorrichtung zugeordnete Alarmvorrichtung aktivieren. Die Alarmvorrichtung kann beispielsweise eine Anzeige auf einem Display an der Backvorrichtung sein. Sie kann ferner ein optisches Signal in Form einer Kontrolleuchte sein. Sie kann schließlich ein akustisches Signal sein, welches durch einen Lautsprecher abgegeben wird.

Schließlich ist es möglich, das Überwachungssignal über ein Datennetz auf eine entfernte Überwachungsstation zu übertragen. So wird eine Fernwartung der Backvorrichtung möglich. Beispielsweise kann der Hersteller der Backvorrichtung in einer Überwachungszentrale die Überwachungssignale aller vernetzten Überwachungsvorrichtung sammeln und auswerten. Wenn die Überwachungssignale einer Backvorrichtung kritische Werte annehmen, kann ein Wartungsteam mit der Wartung dieser Vorrichtung beauftragt werden. Ebenfalls können die Techniker oder Monteure des Herstellers die übertragenen Überwachungssignale zur Vorbereitung von Routine-Wartungsarbeiten verwenden. Die Überwachungssignale erlauben eine Feststellung, welche Wartungsarbeiten bei der betroffenen Backvorrichtung erforderlich sind.

Bei dieser Fernüberwachung ist die Auswerteeinheit vorzugsweise in der Überwachungsstation angeordnet.

Beliebige Datennetze können zur Übertragung der Überwachungssignale eingesetzt werden. Falls in dem Betriebsraum der Backvorrichtung ein Telefonkabel verlegt ist, kann ein analoges oder digitales Telefonnetz zur Übertragung der Daten eingesetzt werden. Ebenfalls kann ein Funktelefonnetz eingesetzt werden, wenn am Betriebsort der Backvorrichtung ein Netzzugang möglich ist. Üblicherweise kann das GSM-Funktelefonnetz für die Signalübertragung eingesetzt werden. Ebenfalls können auf der Grundlage der Überwachungssignale Textmeldungen generiert werden, die über das sogenannte SMS-Protokoll als Kurznachricht im GSM-Telefonnetz übertragen werden. Schließlich können beliebige Datenübertragungsprotokolle im GSM-Netz, wie zum Beispiel GPRS, eingesetzt werden. Auch können digitale Funkdatennetze wie UMTS oder auch verkabelte oder kabellose lokale Datennetze (LAN) zur Übertragung der Überwachungssignale eingesetzt werden.

Wie erwähnt, kann die Backvorrichtung eine Steuereinrichtung aufweisen, die bei Überschreiten eines Schwellenwertes den Betriebsstrom der Heizvorrichtung und/oder der Transportvorrichtung abstellt.

Zur oben besprochenen Erfassung der Bewegung der Transportvorrichtung können beliebige Bewegungssensoren eingesetzt werden. Beispielsweise kann eine Lichtschranke in der Bewegungsbahn des Tragmittels der Transportvorrichtung angeordnet werden, welche abhängig von der Bewegung des Tragmittels wechselnde Lichtsignale erfaßt und in entsprechende Überwachungssignale umwandelt. Auch kann ein Schleifkontakt vorgesehen sein, der mit einem metallischen Teil eines vorbei bewegten Tragmittels zusammenwirkt und aufgrund des Kontaktes ein Überwachungssignal erzeugt. Bei einem metallischen Tragmittel kann ein berührungsloser Sensor, insbesondere ein magnetischer Sensor, nahe der Bewegungsbahn des Tragmittels eingesetzt werden.

### Kurze Beschreibung der Zeichnungen

Nachfolgend werden Ausführungsformen der Erfindung unter Bezugnahme auf die beigefügten Zeichnungen beschrieben. Die Zeichnungen zeigen in:
- Fig. 1: eine Seitenansicht einer erfindungsgemäßen Backvorrichtung;
- Fig. 2: eine vergrößerte Seitenansicht der Heizvorrichtung der erfindungsgemäßen Backvorrichtung;

- Fig. 3: eine Draufsicht der Heizvorrichtung aus Fig. 2;
- Fig. 4: einen schematischen Schaltplan der Stromversorgung der Heizvorrichtung aus den Fig. 2 und 3,
- Fig. 5: einen schematischen Schaltplan der Stromversorgung des Antriebsmotors der Transportvorrichtung und
- Fig. 6: eine schematische Darstellung der Vernetzung der erfindungsgemäßen Backvorrichtung.

### Weg(e) zur Ausführung der Erfindung

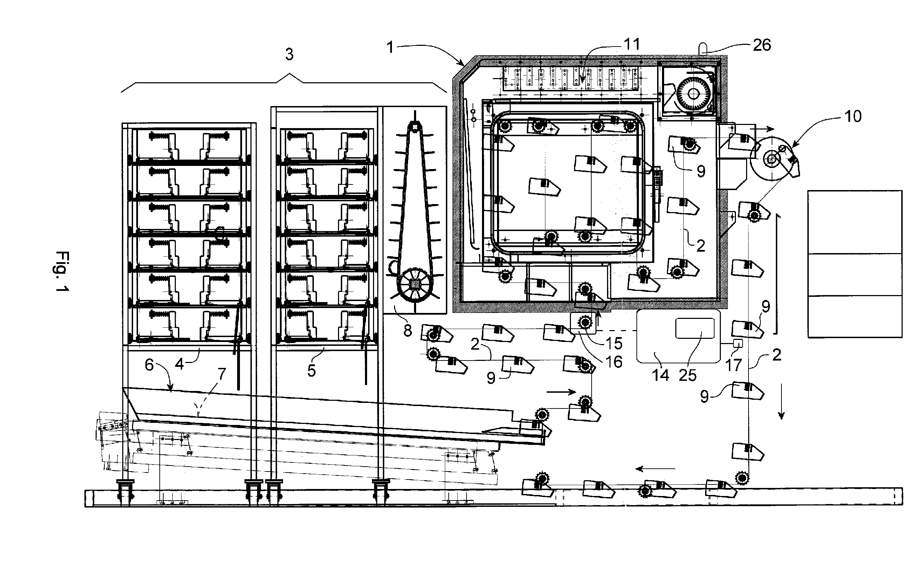

Die in Fig. 1 dargestellte Backvorrichtung umfaßt einen Backofen 1 zum Backen von Backrohlingen oder Teiglingen, welche meist angetaut, aufgetaut oder tiefgefroren und/oder vorgebacken sind und durch eine Transportvorrichtung automatisch dem Backraum des Backofens 1 zugeführt werden. Der Backofen 1 ist thermisch isoliert und weist auf der in Fig. 1 erkennbaren Seite ein Sichtfenster auf. Zur besseren Übersichtlichkeit ist die Seitenwand des Backofens 1 transparent dargestellt. Die Backrohlinge sind in Fig. 1 nicht dargestellt.

Zum Transport der Backrohlinge in den Backofen 1 ist eine Transportvorrichtung vorgesehen, welche ein Paar im Abstand und parallel zueinander umlaufender Förderketten 2 aufweist. Wiederum aus Gründen der Übersichtlichkeit ist der Verlauf der Förderketten 2 in der Fig. 1 nur durch eine dünne Linie eingezeichnet. Da die Förderketten 2 auch durch den beheizten Backraum des Backofens 1 laufen, sind sie vorzugsweise aus hitzefesten Materialien, insbesondere aus Stahl, hergestellt.

Ferner umfaßt die Backvorrichtung aus Fig. 1 eine Zufuhrvorrichtung 3, welche aus mehreren Elementen besteht. Zum einen sind zwei Beschickungswagen 4 und 5 zu erkennen, auf denen Backrohlinge, insbesondere vorgebackene Brötchen, in verschiedenen Lagen angeordnet sind. Unterhalb der Beschickungswagen 4 und 5 ist eine Wanne 6 angeordnet, deren Bodenfläche eine geneigte Rutschfläche 7 bildet.

Während die Beschickungswagen 4 und 5 Backrohlinge für Brötchen transportieren, die auf die Rutschfläche 7 fallen, ist an der dem Backofen 1 zugewandten Seite des Beschickungswagens 5 ein Vorratsmagazin 8 für längliche Backwaren, insbesondere Baguettes, angeordnet.

Zwischen den Förderketten 2 sind jeweils quer verlaufend Tragmittel 9 angeordnet, von denen die Backrohlinge aufgenommen und in den Backraum des Backofens 1 transportiert werden. In dem Backraum des Backofens 1 verlaufen die zueinander parallelen Transportketten 2 mäanderförmig, so daß die Tragmittel 9 für eine ausreichend lange Zeit innerhalb des Backraums des Backofens 1 verweilen. Die Tragmittel 9 sind nach Art einer Gondel an dem Förderkettenpaar befestigt. Hierzu sind sie um eine quer zum Förderkettenpaar 2 verlaufende Achse schwenkbar angehängt. Aufgrund ihres unterhalb der Schwenkachse liegenden Schwerpunkts verharren sie ohne äußere Einwirkung in der in Fig. 1 dargestellten Position, in der ihre Auflagefläche im wesentlichen waagerecht verläuft oder gegebenenfalls um einen kleinen Winkel zur in Fig. 1 rechten Seite hin nach unten geneigt ist.

Am Austritt aus dem Backraum des Backofens 1 ist eine Abgabestation 10 vorgesehen, an der die fertig gebackenen Backwaren von den Tragmitteln 9 entfernt werden.

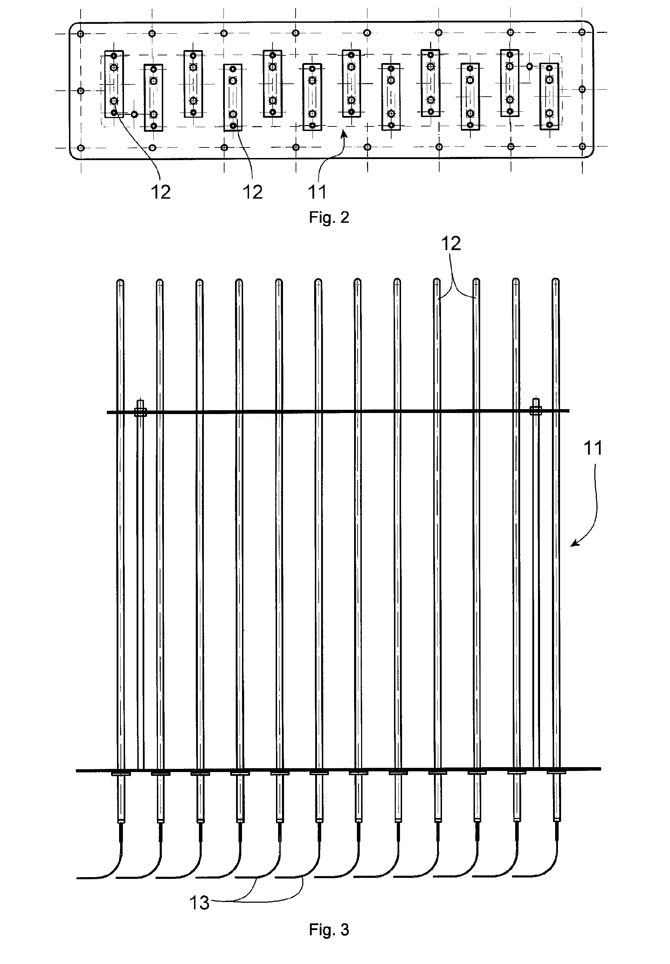

Im oberen Abschnitt des Backofens 1 ist eine innerhalb des Backofens 1 angeordnete Heizvorrichtung 11 zu erkennen, die detaillierter in den Fig. 2 und 3 dargestellt ist. Die Heizvorrichtung 11 besteht aus zwölf versetzt zueinander angeordneten, U-förmigen Heizstäben 12, welche jeweils über ein Anschlußkabel 13 mit einer Stromversorgung verbunden sind. Die Stromversorgung ist in dem in Fig. 1 schematisch unterhalb des Backofens 1 dargestellten Steuerungskasten 14 aufgenommen.

Ferner ist ein Antriebsritzel 15, welches mit der Förderkette 2 kämmt, durch einen Antriebsmotor 16 angetrieben. Der Antriebsmotor 16 treibt an der gegenüberliegenden Seite ein entsprechendes Ritzel in gleicher Drehrichtung an. Der Antriebsmotor 16 ist ebenfalls mit einer Stromversorgung innerhalb des Steuerungskastens 14 verbunden.

Schließlich ist in Fig. 1 ein mit dem Steuerungskasten 14 verbundener Bewegungssensor 17 zu erkennen. Der Bewegungssensor 17 enthält eine Spule und arbeitet induktiv. Jedesmal, wenn ein Tragmittel 9 in geringem Abstand an dem Bewegungssensor 17 vorbeiläuft, gibt dieser ein Signal ab, welches über ein Signalkabel zum Steuerungskasten 14 geleitet wird.

Anhand des Signals des Bewegungssensors 17 läßt sich der ordnungsgemäße Betrieb der Förderkette 2 feststellen. Über den Motorstrom kann eine Auswerteeinheit in dem Steuerungskasten 14 ermitteln, ob die Förderkette 2 angetrieben wird. Wenn die Förderkette 2 angetrieben wird, müssen periodisch Signale des Bewegungssensors 17 erfaßt werden, wenn die metallischen Tragmittel 9 an diesem Bewegungssensor 17 vorbeilaufen. Wird dieses Signal nicht erfaßt, ist davon auszugehen, daß die Förderkette 2 blockiert ist. In diesem Fall schaltet der Steuerungskasten 14 die Heizvorrichtung 11 des Backofens und die Stromzufuhr des Antriebsmotors 16 aus.

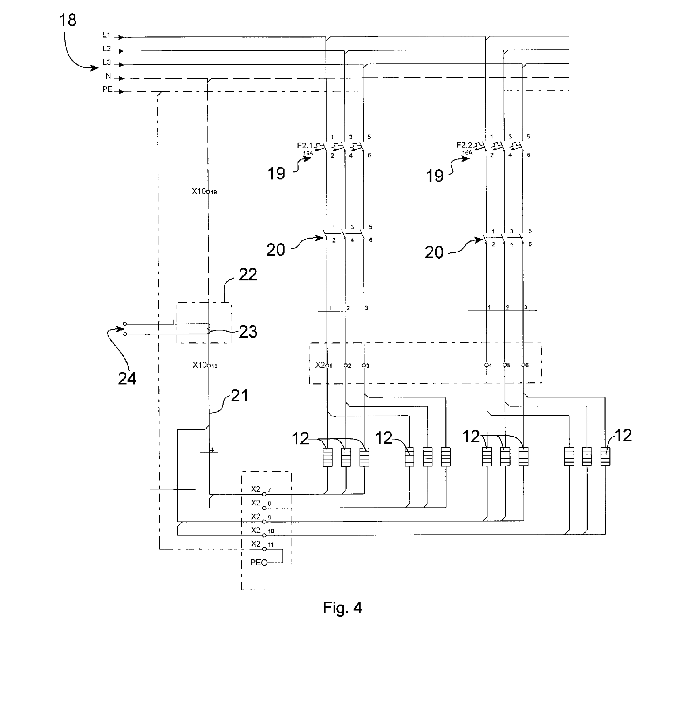

Fig. 4 zeigt die Stromversorgung für die zwölf Heizstäbe 12. Die Heizstäbe 12 sind symmetrisch mit einem 3-Phasen-Drehstromnetz 18 verschaltet. Die Heizstäbe 12 sind ferner in zwei Gruppen über Sicherungen 19 und Schütze 20 abgesichert.

Wie erwähnt, fließt bei der vorliegenden symmetrischen Verschaltung der Heizstäbe 12 bei voll funktionsfähigen Heizstäben kein Strom über den Nulleiter 21 der Anordnung. Nur wenn ein Heizstab 12 ausfällt, wird die Belastung der drei Phasen des Netzes 18 asymmetrisch, und es fließt ein Strom über den Nulleiter 21. Zur Erfassung dieses Stroms ist ein induktiver Stromsensor 22 vorgesehen, der eine Spule 23 aufweist, die vom Nulleiter 21 durchragt wird. Eine Schnittstelle des Stromsensors 22 bilden die Anschlußklemmen 24 der Spule, an denen die Spannung und der Strom in der Spule 23 abgegriffen werden können. Die Anschlußklemmen 24 sind mit einer Überwachungseinheit in dem Steuerungskasten 14 verbunden.

Wenn ein Signal über die Anschlußklemmen 24 abgegriffen wird, das einen gewissen Schwellenwert überschreitet, folgt hieraus, daß wegen des Ausfall eines Heizstabs 12 ein Strom über den Nulleiter fließt. Das Signal kann entweder in dem Steuerungskasten 14 auf einem Datenspeicher abgespeichert werden oder über eine Anzeigevorrichtung, beispielsweise dem Bildschirm 25 am Steuerungskasten 14 (siehe Fig. 1), angezeigt werden. Es ist auch möglich, daß über den Steuerungskasten 14 eine Signallampe 26 auf dem Backofen 1 aktiviert wird.

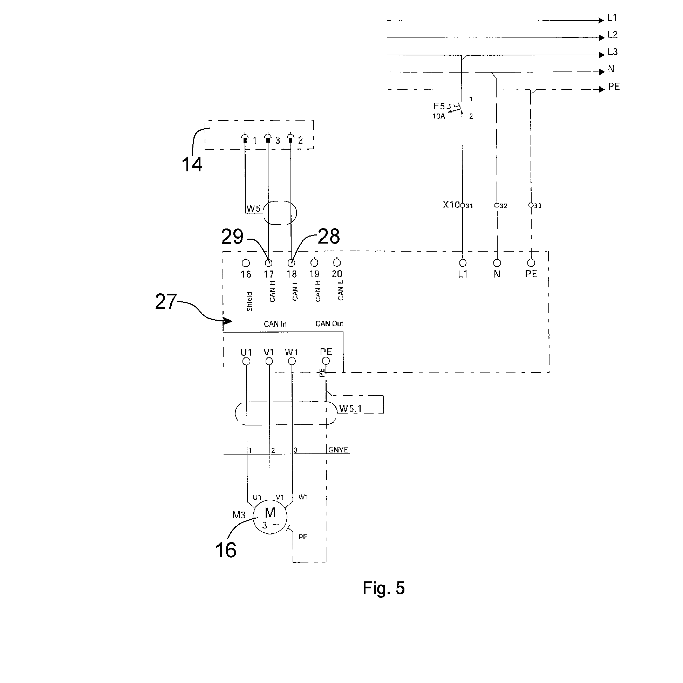

Die Fig. 5 zeigt die Stromversorgung des Antriebsmotors 16, der die als Transportvorrichtung wirkenden Förderketten 2 antreibt. Der Antriebsmotor 16 wird von einem Strom-umrichter 27 gespeist. Über Anschlußklemmen 28, 29, welche eine Schnittstelle zur Elektronik des Strom-umrichters bilden, kann ein Signal abgegriffen werden, welches dem von dem Strom-umrichter an den Antriebsmotor 16 abgegebenen Strom entspricht. Das Signal wird zum Steuerungskasten 14 weitergeleitet. Für die Signalübertragung können beliebige geeignete Signalleitungen oder Datenbussystem eingesetzt werden, z.B. ein CAN-Bus (CAN = Controller Area Network).

Bei ordnungsgemäßem Betrieb der Transportvorrichtung hat der Strom des Strom-umrichters einen bestimmten Sollwert. Sinnvollerweise wird in der Steuerung eine gewisse Bandbreite um diesen Sollwert festgelegt, die durch einen oberen und unteren Schwellenwert begrenzt ist. Unterschreitet der Strom den unteren Schwellenwert, ist davon auszugehen, daß der Antriebsmotor 16 (Fig. 1) nicht genügend Kraft zum Antrieb der Förderkette 2 erzeugt. Dies ist beispielsweise der Fall, wenn die Kraftübertragung von der Motorwelle des Antriebsmotors 16 auf die Förderkette 2 fehlerhaft ist.

Übersteigt der Strom des Antriebsmotors 16 einen oberen Schwellenwert, wird die auf die Förderkette 2 übertragene Kraft zu groß. Dies läßt darauf schließen, daß die Förderkette 2 beispielsweise aufgrund unzulässig hoher Reibung oder einer Beschädigung zu schwergängig ist. Ebenfalls können Verschmutzungen oder verklemmte Gegenstände die Förderkette 2 bremsen.

Die zum Steuerungskasten 14 weitergeleiteten Signale des Motorstroms, des Heizstabstroms und des Bewegungssensors können hier auf einem Datenspeicher aufgezeichnet und durch Wartungspersonal ausgelesen und analysiert werden. Es ist aber auch möglich, den Steuerungskasten mit einem Datennetzwerk zu verbinden, so daß die Signale unmittelbar an eine Überwachungsstation übertragen werden.

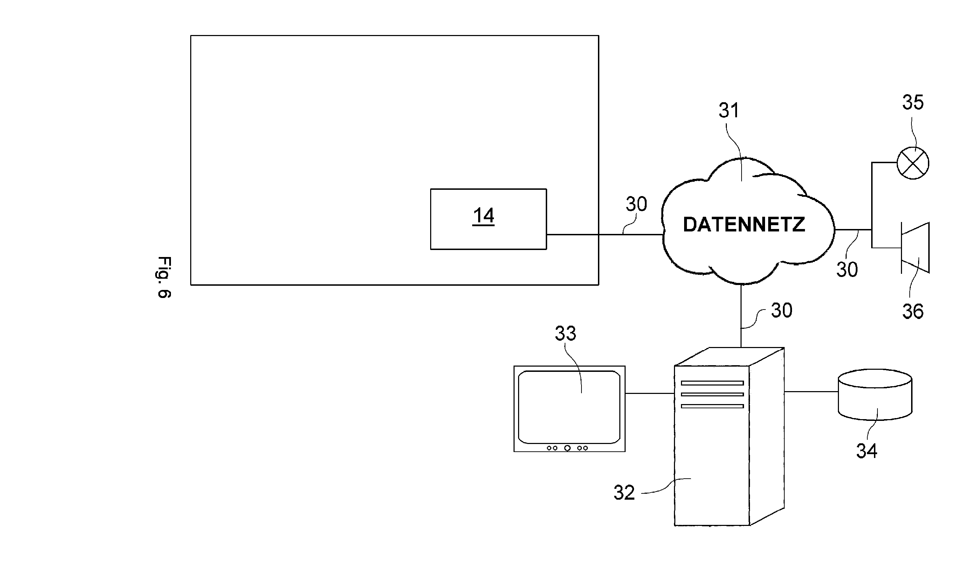

Die Figur 6 zeigt schematisch und nicht maßstabsgetreu die Vernetzung der erfindungsgemäßen Backvorrichtung zur Durchführung der oben beschriebenen Überwachung. Der Steuerkasten 14 der Backvorrichtung ist über eine Datenleitung 30 mit einem Datennetz 31 verbunden. Das Datennetz 31 kann ein beliebiges, zur Übertragung von Daten, vorzugsweise in digitaler Form geeignetes Netzwerk sein, z.B. ein Telefonnetz oder Funktelefonnetz, ein Funkdatennetz wie UMTS, das Internet mit einem beliebigen Zugang sowie ein lokales Datennetz, welches die Komponenten einer lokalen Datenverarbeitungsanlage vernetzt. Über eine weitere Datenleitung 30 werden die Überwachungssignale des Steuerkastens 14 an einen Überwachungscomputer 32 übertragen, der eine Überwachungsstation für die Backvorrichtung bildet. Der Überwachungscomputer 32 kann die empfangenen Überwachungsdaten analysieren und/oder auf einem Datenspeicher (z.B. einem Festplattenlaufwerk 34) Abspeichern und/oder auf einer Anzeigevorrichtung (z.B. einem Monitor 33) anzeigen und/oder ein Alarmsignal auslösen. Ein einziger Überwachungscomputer 23 kann die Überwachungsstation für mehrere verschiedene Backvorrichtungen bilden, die alle über Datenleitungen 30 mit dem Datennetz 31 verbunden sind.

Der Überwachungscomputer 32 kann sich in dem gleichen Gebäude wie die Backvorrichtung befinden. Er kann aber auch in einem Gebäude des Herstellers der Backvorrichtung oder in dem Gebäude eines Servicetechnikers stehen und über ein Datennetz 31 (z.B. das Internet) mit dem Steuerkasten 14 verbunden sein. Gleiches gilt für die Alarmvorrichtungen, die in Fig. 6 als Signalleuchte 35 und als Lautsprecher 36 für Alarmsignale dargestellt sind. Diese Alarmvorrichtungen 35,36 können in unmittelbarer Nähe zu dem Überwachungscomputer 32 oder von diesem entfernt angeordnet sein und über ein beliebiges Datennetz mit dem Überwachungscomputer 32 und/oder dem Steuerungskasten 14 der Backvorrichtung verbunden sein. Die Alarmvorrichtungen 35,36 können durch ihre Alarmsignale alternativ den Bediener der Backvorrichtung zur Durchführung unverzüglicher Maßnahmen veranlassen oder einen Service-Techniker über einen erheblichen Fehler informieren, der eine unverzügliche Wartung der Backvorrichtung erfordert.

Bezugszeichenliste:
- 1: Backofen
- 2: Förderkette, Transportvorrichtung
- 3: Zufuhrvorrichtung
- 4: Beschickungswagen
- 5: Beschickungswagen
- 6: Wanne
- 7: Rutschfläche
- 8: Vorratskarussell
- 9: Tragmittel
- 10: Abgabestation
- 11: Heizvorrichtung
- 12: Heizstab, Heizmittel
- 13: Anschlußkabel
- 14: Steuerungskasten
- 15: Antriebsritzel
- 16: Antriebsmotor
- 17: Bewegungssensor
- 18: Drehstromnetz
- 19: Sicherungen
- 20: Schütze
- 21: Nulleiter
- 22: Stromsensor
- 23: Spule
- 24: Anschlußklemmen
- 25: Bildschirm
- 26: Signallampe
- 27: Strom-umrichter

- 28: Anschlußklemme
- 29: Anschlußklemme
- 30: Datenleitung
- 31: Datennetz
- 32: Überwachungscomputer, Überwachungsstation
- 33: Monitor
- 34: Festplatte
- 35: Alarmvorrichtung, Signalleuchte
- 36: Alarmvorrichtung, Lautsprecher

## Patentansprüche

1. Backvorrichtung mit einem Backofen (1), der eine Heizvorrichtung (11) aufweist, und mit einer Transportvorrichtung (2) für den Transport von Backrohlingen durch den Innenraum des Backofens (1), wobei die Heizvorrichtung (11) und die Transportvorrichtung (2) mit einem Betriebsstrom gespeist werden, **dadurch gekennzeichnet, daß** sie mindestens eine Überwachungsvorrichtung zur Überwachung des Betriebsstrom mindestens einer der beiden Vorrichtungen (2,11) aufweist und daß die Überwachungsvorrichtung mindestens eine Schnittstelle zur Ausgabe eines Überwachungssignals aufweist.

2. Backvorrichtung nach Anspruch 1, **dadurch gekennzeichnet, daß** die Überwachungsvorrichtung den Betriebsstrom der Heizvorrichtung (11) überwacht.

3. Backvorrichtung nach Anspruch 2, **dadurch gekennzeichnet, daß** die Heizvorrichtung Heizmittel (12) umfaßt, die symmetrisch mit den Phasen eines 3-Phasen-Stromnetzes verschaltet sind.

4. Backvorrichtung nach Anspruch 3, **dadurch gekennzeichnet, daß** die Überwachungsvorrichtung einen Stromfluß durch den Nulleiter (21) des 3-Phasen-Stromnetzes mißt und überwacht.

5. Backvorrichtung nach einem der vorangehenden Ansprüche, **dadurch gekennzeichnet, daß** die Überwachungsvorrichtung den Betriebsstrom eines der Transportvorrichtung (2) zugeordneten Antriebsmotors (16) mißt und überwacht.

6. Backvorrichtung nach Anspruch 5, **dadurch gekennzeichnet, daß** der Antriebsmotor (16) über einen Stromumrichter (27) gespeist wird und daß der Stromumrichter (27) als Überwachungsvorrichtung wirkt und ein die Stromstärke des Betriebsstroms repräsentierendes Überwachungssignal erzeugt.

7. Backvorrichtung nach einem der vorangehenden Ansprüche, **dadurch gekennzeichnet, daß** sie einen Bewegungssensor (17) aufweist, der die Bewegung der Transportvorrichtung (2) erfaßt und über eine Schnittstelle ein dieser Bewegung zugeordnetes Überwachungssignal abgibt.

8. Backvorrichtung nach einem der vorangehenden Ansprüche, **dadurch gekennzeichnet, daß** das Überwachungssignal auf einer Datenspeichervorrichtung (34) abgespeichert wird.

9. Backvorrichtung nach Anspruch 8, **dadurch gekennzeichnet, daß** das Überwachungssignal kontinuierlich abgespeichert wird.

10. Backvorrichtung nach Anspruch 8, **dadurch gekennzeichnet, daß** das Überwachungssignal in festgelegten Zeitabständen abgespeichert wird.

11. Backvorrichtung nach Anspruch 8, **dadurch gekennzeichnet, daß** das Überwachungssignal bei Überschreiten eines Schwellenwertes abgespeichert wird.

12. Backvorrichtung nach einem der vorangehenden Ansprüche, **dadurch gekennzeichnet, daß** das Überwachungssignal bei Überschreiten eines Schwellenwertes eine der Backvorrichtung zugeordnete Alarmvorrichtung (35,36) aktiviert.

13. Backvorrichtung nach Anspruch 12, **dadurch gekennzeichnet, daß** die Alarmvorrichtung (35,36) ein akustisches oder optisches Alarmsignal abgibt.

14. Backvorrichtung nach einem der vorangehenden Ansprüche, **dadurch gekennzeichnet, daß** das Überwachungssignal über ein Datennetz (31) auf eine entfernte Überwachungsstation (32) übertragen wird.

15. Backvorrichtung nach Anspruch 14, **dadurch gekennzeichnet, daß** die Überwachungssignale über eines der folgenden Datennetze (31) übertragen werden:
- analoges oder digitales Telefonnetz;- Funktelefonnetz;- Funkdatennetz;-Internet;- lokales Datennetz (LAN).

16. Backvorrichtung nach einem der vorangehenden Ansprüche, **dadurch gekennzeichnet, daß** sie eine Steuereinheit (14) aufweist, die bei Überschreiten eines Schwellenwerts des Überwachungssignals den Betriebsstrom der Heizvorrichtung und/oder der Transportvorrichtung abstellt.

17. Backvorrichtung nach einem der Ansprüche 7 bis 16, **dadurch gekennzeichnet, daß** der Bewegungssensor (17) mindestens einer der folgenden Sensoren ist:
- eine in der Bewegungsbahn des Tragmittels angeordneter optischer Sensor, insbesondere Lichtschranke;- ein nahe der Bewegungsbahn des Tragmittels angeordneter Schleifkontakt, der ein vorbei bewegtes Tragmittel berührt;- ein berührungsloser Sensor, insbesondere magnetischer oder kapazitiver Sensor, nahe der Bewegungsbahn des Tragmittels, der Metallteile eines vorbeibewegten Transportmittels erfaßt.
